Europäisches Patentamt

European Patent Office

Office européen des brevets

(19)

(11) Numéro de publication : **0 263 863 B1**

(12) **FASCICULE DE BREVET EUROPEEN**

(45) Date de publication du fascicule du brevet :
04.03.92 Bulletin 92/10

(21) Numéro de dépôt : **87902541.9**

(22) Date de dépôt : **13.04.87**

(86) Numéro de dépôt international :
**PCT/FR87/00119**

(87) Numéro de publication internationale :
**WO 87/06320 22.10.87 Gazette 87/23**

(51) Int. Cl.⁵ : **F16K 31/06,** F16K 15/02

(54) **SOUPAPE OU VANNE A HAUT NIVEAU DE FIABILITE.**

(30) Priorité : **14.04.86 FR 8605288**

(43) Date de publication de la demande :
**20.04.88 Bulletin 88/16**

(45) Mention de la délivrance du brevet :
**04.03.92 Bulletin 92/10**

(84) Etats contractants désignés :
**DE FR GB IT**

(56) Documents cités :
**CH-A- 108 547**
**DE-A- 2 303 450**
**DE-A- 3 329 652**
**GB-A- 2 082 292**

(73) Titulaire : **SOCIETE EUROPEENNE DE PROPULSION**
**24 rue Salomon de Rothschild**
**F-92150 Suresnes (FR)**

(72) Inventeur : **GOUHIER, Dany**
**Bois de la Mare Saint Etienne/Bailleul**
**F-27920 Saint Pierre de Bailleul (FR)**

(74) Mandataire : **Levesque, Denys et al**
**Cabinet Beau de Loménie 55, rue d'Amsterdam**
**F-75008 Paris (FR)**

## Description

L'invention se rapporte à une soupape ou vanne comprenant un organe obturateur mobile et un siège annulaire conjugué, ledit organe obturateur pouvant se déplacer suivant une direction perpendiculaire au plan du siège de façon à venir obturer ce dernier ou à s'en éloigner, la soupape étant ainsi susceptible d'interrompre ou d'autoriser l'écoulement d'un fluide via ledit siège. L'organe obturateur, constitué par une bille qui coopère avec le siège de forme tronconique, est fixé au centre d'une membrane circulaire flexible, sensiblement plane, disposée parallèlement au plan du siège et comportant une ouverture circulaire centrale pour permettre le montage de la bille par l'intermédiaire d'encastrement au support et, sur son pourtour, à une embase dont le siège est solidaire.

Une soupape de ce genre est connue par le document GB-A-2 082 292. Cependant, cette soupape comporte plusieurs causes de décentrage de la bille obturatrice, les principales résidant dans la rigidité incertaine de la membrane dans son plan, le mode de fixation de celle-ci par pincement de son pourtour et l'usage d'un ressort hélicoïdal de rappel de la bille sur son siège. Des risques de fuite résultent dès lors soit directement du décentrage, soit du fait de l'usure due au frotement entre pièces mobiles décentrées. De tels phénomènes, qui sont en outre source de pollution du fluide par des particules solides détachées desdites pièces (risquant de causer des obstructions dans le circuit du fluide), sont particulièrement nocifs lorsque la soupape doit présenter une grande durée de vie et une haute fiabilité, de même que les appareillages qui lui sont associés, alors qu'elle ne peut être ni inspectée, ni entretenue.

Le document DE-A-2 303 450 décrit une autre soupape à membrane, dont l'organe obturateur est constitué non pas par une bille, mais par un élément cylindrique s'appliquant à plat sur le siège. Si cette disposition écarte les problèmes de centrage, elle n'élimine nullement les risques de fuite dus aux positions inclinées vicieuses que ne manque pas de prendre l'élément cylindrique par rapport au siège, sans que la membrane, très souple de par sa structure, puisse s'y opposer.

Afin de remédier à ces inconvénients, la présente invention a pour objet une soupape à haut niveau de fiabilité, fonctionnant sans frottements, dans laquelle la membrane, mécaniquement isotrope autour de son centre, est déformable élastiquement suivant la direction perpendiculaire à son plan mais sensiblement indéformable suivant toute direction radiale de celui-ci; en outre, montée sous précontrainte, la membrane exerce une force de rappel sur l'organe obturateur tendant à appliquer celui-ci sur son siège, tandis que le support central offre une cavité dans laquelle la bille, en appui sur le fond de la cavité, est sertie, et que la liaison d'encastrement de la membrane avec le support central est obtenue par pincement et avec l'embrase par soudage.

Dans une soupape ainsi conçue, la bille obturatrice est et reste centrée sur son siège avec précision et ses déplacements, parfaitement guidés, ne s'accompagnent que de déformations de la membrane par flexion hors de son plan naturel, sans aucun frottement ni entre l'organe obturateur et la région centrale de la membrane (par rapport à laquelle il est fixe), ni entre le pourtour de la membrane et l'embase qui la supporte (du fait de la liaison d'encastrement par soudage prévue ici). Il n'y a donc ni usure par friction, ni, à plus forte raison, risque de pollution du fluide traversant la soupape, ce qui assure à celle-ci une très grande longévité et une excellente fiabilité, de même qu'aux dispositifs auxquels elle est raccordée. En outre, une soupape selon l'invention n'exige pas de lubrification, ne présentant aucun risque de grippage. Comme la membrane est montée sous précontrainte, il n'est besoin d'aucun élément auxiliaire de rappel, cause de décentrage à plus ou moins brève échéance. Ainsi la membrane impose à la bille obturatrice une coaxialité parfaite et permanente par rapport à son siège sans risque de frottement ni de décentrage, de sorte qu'une étanchéité excellente et durable est garantie.

Dans une forme de réalisation, la membrane forme avec le support central une paroi continue qui délimite une chambre avec l'embase, cette dernière étant percée d'un orifice permettant le passage du fluide au travers d'elle, la soupape formant ainsi un clapet qui peut fonctionner dans les deux sens de passage du fluide et qui en autorise l'écoulement seulement lorsque sa pression dépasse un seuil déterminé dont la valeur dépend du sens de passage choisi à travers la soupape.

Dans une autre forme de réalisation, la membrane est ajourée pour permettre le passage du fluide au travers d'elle; l'embase ne comporte alors aucun autre orifice que l'orifice nécessaire pour que le fluide puisse parvenir au siège obturable.

On peut associer à une soupape telle que définie ci-dessus un dispositif d'actionnement permettant de commander les déplacements de son organe obturateur, constitué par un électro-aimant qui peut agir directement ou indirectement sur l'organe obturateur; on obtient ainsi une électrovanne de haute qualité, dont la partie soupape constitue de préférence un ensemble unitaire monté en tant que tel, de façon interchangeable, sur le dispositif d'actionnement.

D'autres caractéristiques et avantages de l'invention ressortiront plus clairement de la description qui va suivre, en regard des dessins annexés, d'exemple de réalisation non limitatifs.

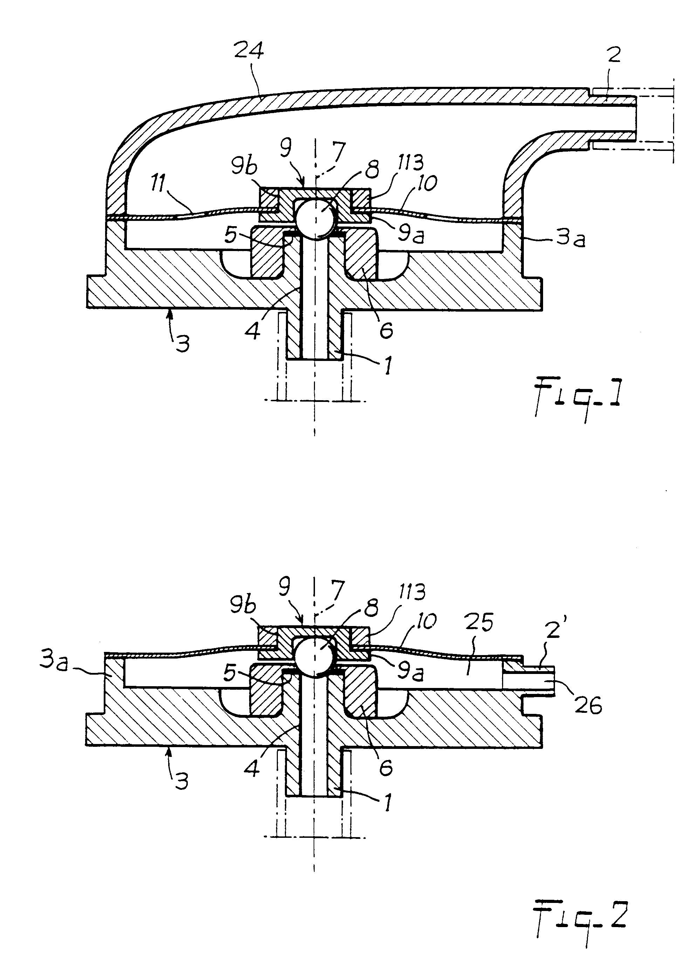

Les figures 1 à 3 représentent respectivement, en coupe, un clapet anti-retour dans deux variantes d'éxécution et une électrovanne incorporant une soupape selon l'invention.

On voit sur la figure 1 un clapet anti-retour possédant un embout d'entrée 1 et un embout de sortie 2 par lesquels il peut être inséré dans une canalisation véhiculant un fluide. L'embout 1 fait saillie d'une embase 3 en forme de disque percée en son centre, dans l'axe dudit embout, d'un canal 4.

A l'extrémité de celui-ci opposée à l'embout 1 est disposé un anneau 5 réalisé en une matière légèrement souple, telle que le Téflon, et maintenu solidaire de l'embase par une pièce 6. L'anneau 5, dont le plan est parallèle à celui de l'embase et perpendiculaire à l'axe 7 du canal 4, sert de siège à un organe obturateur mobile constitué par une bille 8.

Cette bille est sertie dans un support 9 fixé dans l'ouverture centrale d'une membrane 10 circulaire sensiblement plane, dont le pourtour est fixé à une couronne 3a que comporte, coaxialement à l'axe 7, l'embase 3. La membrane 10, qui s'étend perpendiculairement à l'axe 7, est élastiquement déformable dans la direction de cet axe, mais elle est rigide suivant toute direction radiale par rapport audit axe. Il en résulte que la membrane 10 autorise des déplacements de la bille 8 suivant l'axe 7, tout en maintenant un centrage constant et rigoureux de celle-ci sur ledit axe, donc par rapport au siège 5.

Comme représenté, la membrane 10, naturellement plane, est montée sous une certaine précontrainte suivant l'axe 7, de sorte qu'elle exerce sur la bille 8 une force de rappel qui applique celle-ci sur son siège 5 en position de fermeture afin de garantir l'étanchéité même en présence de vibrations.

Par-dessus la membrane est prévu un carter 24, qui se raccorde à la couronne 3a de l'embase 3 et auquel appartient l'embout de sortie 2.

Lorsqu'un fluide est introduit par l'embout d'entrée 1, il exerce une force de pression sur la bille 8 ; celle-ci se soulève en quittant son siège 5 et le fluide trouve un passage dans l'intervalle annulaire apparaissant ainsi entre la bille et le siège, en direction de l'embout de sortie 2, qu'il atteint à travers la membrane 10 via des orifices 11 percés dans celle-ci.

A l'inverse, lorsque le fluide se prés ente à l'embout de sortie 2, il trouve la bille 8 en position de fermeture sur son siège 5, de sorte qu'il est empêché d'atteindre l'embout 1.

La figure 2 montre une variante de réalisation, dans laquelle la membrane 10 est formée d'une feuille continue, non ajourée, délimitant avec l'embase 3 et la couronne 3a de celle-ci une chambre 25. Dans ce cas est prévu, au-dessous de la membrane 10, c'est-à-dire du même côté que l'embout d'entrée 1, un embout de sortie 2′ en regard d'un orifice 26 percé dans la couronne 3a (ou encore dans l'embase 3 elle-même), tandis que le carter 24, devenu inutile, disparaît.

Les liaisons d'encastrement de la membrane 10 avec l'embase 3, d'une part, et avec le support 9 de la bille 8, d'autre part, peuvent être réalisés par tous moyens appropriés : soudage, collage, pincement, sertissage, etc. Dans le présent exemple, elle est soudée le long de son pourtour extérieur à la couronne 3a de l'embase 3, et elle est pincée, suivant le pourtour de son ouverture centrale, entre une bague 113 et une collerette 9a que comporte le support 9, lequel se monte en ajustement serré dans cette ouverture par une autre partie 9b de forme cylindrique, offrant le même diamètre que ladite ouverture.

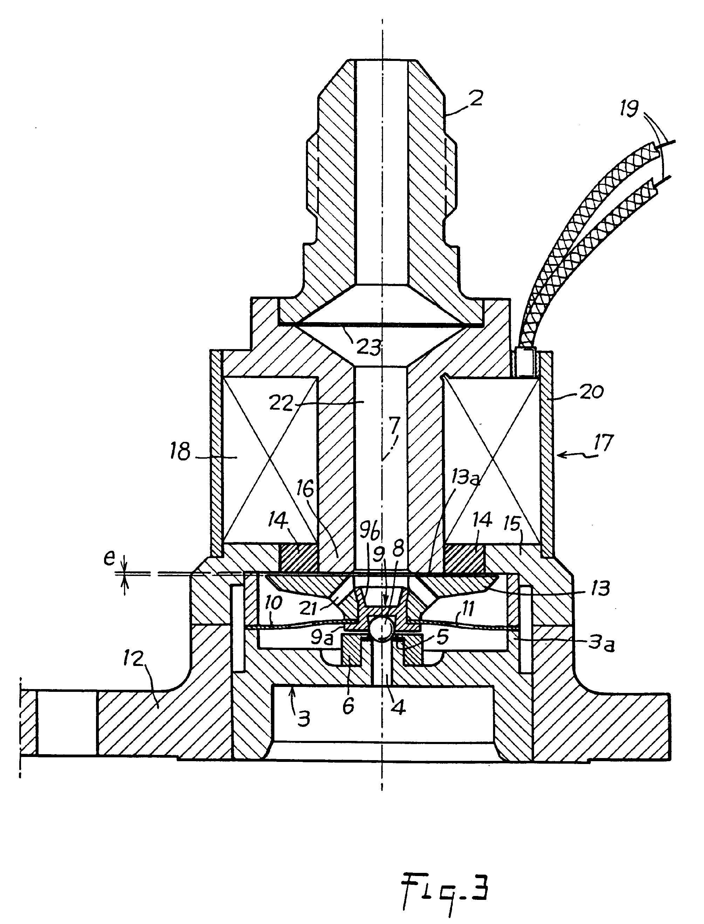

La figure 3 montre une électrovanne réalisée à l'aide d'un clapet semblable à celui de la figure 1, et les mêmes références désignent les éléments homologues. L'embase 3 est ici montée dans un socle 12. Quant à la membrane 10, elle est pincée, suivant le pourtour de son ouverture centrale, entre la collerette 9a du support 9 de la bille 8 et l'extrémité d'une pièce annulaire 13 montée coaxialement à l'axe 7, dans laquelle est immobilisé par sertissage le support 9.

La face plane 13a qu'offre la pièce 13 à l'opposé de son extrémité de pincement de la membrane 10 est située en regard, avec un léger écartement d'entrefer e suivant la direction de l'axe 7, d'un intervalle annulaire non magnétique 14 ménagé entre les pièces polaires 15 et 16 d'un électro-aimant 17 comportant une bobine électromagnétique 18, avec une structure générale coaxiale à l'axe 7.

Au repos, la bille 8 est, comme dans le clapet anti-retour de la figure 1, maintenue par la membrane 10 dans sa position de fermeture où elle obture son siège 5.

Lorsque la bobine 18 de l'électro-aimant 17 est excitée via des conducteurs d'alimentation 19, la pièce 13, réalisée en métal magnétique de façon à servir d'armature mobile à l'électro-aimant 17, est attirée vers les pièces polaires 15, 16 de celui-ci par le flux magnétique qui s'établit dans le circuit magnétique formé par la pièce polaire 15, l'armature mobile 13, la pièce polaire 16 et une virole cylindrique 20 refermant ledit circuit autour de la bobine 18. L'armature 13 en se déplaçant, entraîne, par l'intermédiaire de son support 9, la bille 8 de telle sorte que cette dernière exécute une course rectiligne suivant l'axe 7 de son siège 5 et quitte celui-ci. Un chemin est de ce fait ouvert pour le fluide dont l'électrovanne a pour rôle de commander l'écoulement, ce chemin passant par le canal 4, les orifices 11 de la membrane 10, des canaux 21 percés obliquement à travers la pièce d'armature 13, un conduit 22 qu'offre axialement la pièce 16, un filtre 23 et l'embout 2. Lorsque cesse l'excitation de la bobine 18, la bille 8 est rappelée en position de fermeture sur son siège 5 par la membrane élastique 10.

Il ressort de la figure 3 que l'embase 3 et la pièce annulaire qui la surmonte au-dessus de la membrane 10, le siège 5 et son support 6, la membrane 10, la bille 8 et son support 9, ainsi que la pièce magnétique 13 forment un ensemble unitaire d'obturation du fluide qui est monté en tant que tel, de préférence de façon amovible, sur le dispositif d'actionnement formé de l'électro-aimant 17, de ses pièces polaires 15, 16 et du socle 12. Ainsi, à un même bloc d'actionnement peut être associé l'un, au choix, de plusieurs ensembles unitaires d'obturation de caractéristiques différentes ou semblables.

Revenant au clapet de la figure 2, on observera qu'il peut livrer passage à un fluide dans deux sens opposés, soit que le fluide pénètre par l'embout 1 pour sortir par l'embout 2', soit qu'il pénètre par ce dernier pour sortir par l'embout 1. Dans chaque cas, le fluide ne peut passer que si sa pression est supérieure à une valeur de seuil qui doit être atteinte pour décoller la bille 8 de son siège 5. En raison de la différence de la surface offerte par la bille 8 au fluide appliqué par l'embout 1 et par la membrane 10 au fluide appliqué par l'embout 2', le seuil de pression est plus élevé dans le premier cas que dans le second.

D'une manière générale, la structure de la soupape procure une excellente stabilité du centrage de la bille 8 par rapport au siège 5 et de la course de celle-ci après leur ajustement en fabrication, et ce dans les cnnditions de fonctionnement les plus dures et après un très grand nombre de manoeuvres.

**Revendications**

1. Soupape ou vanne comprenant un organe obturateur mobile (8) et un siège annulaire conjugué (5), ledit organe obturateur pouvant se déplacer suivant une direction perpendiculaire au plan du siège de façon à venir obturer ce dernier ou à s'en éloigner, la soupape étant ainsi susceptible d'interrompre ou d'autoriser l'écoulement d'un fluide via ledit siège, l'organe obturateur (8), constitué par une bille qui coopère avec le siège (5) de forme tronconique, étant fixé au centre d'une membrane circulaire flexible (10), sensiblement plane, disposée parallèlement au plan du siège (5) et comportant une ouverture circulaire centrale pour permettre le montage de la bille (8) par l'intermédiaire d'un support central (9), la membrane étant fixée par liaison d'encastrement au support (9) et, sur son pourtour, à une embase (3) dont le siège (5) est solidaire, caractérisée par le fait que la membrane (10), mécaniquement isotrope autour de son centre, est déformable élastiquement suivant la direction perpendiculaire à son plan mais sensiblement indéformable suivant toute direction radiale de celui-ci, que, montée sous précontrainte, elle exerce une force de rappel sur l'organe obturateur (8) tendant à appliquer celui-ci sur son siège (5), que le support central (9) offre une cavité dans laquelle la bille, en appui sur le fond de la cavité, est sertie, tandis que la liaison d'encastrement de la membrane (10) avec le support central (9) est obtenue par pincement et avec l'embase (3) par soudage.

2. Soupape selon la revendication 1, caractérisée par le fait que la membrane (10) forme avec le support central (9) une paroi continue qui délimite une chambre (25) avec l'embase (3), cette dernière étant percée d'un orifice (26) permettant le passage du fluide au travers d'elle, la soupape formant ainsi un clapet qui peut fonctionner dans les deux sens de passage du fluide et qui en autorise l'écoulement seulement lorsque sa pression dépasse un seuil déterminé dont la valeur dépend du sens de passage choisi à travers la soupape.

3. Soupape selon la revendication 1, caractérisée par le fait que la membrane (10) est ajourée pour permettre le passage du fluide au travers d'elle.

4. Soupape selon l'une quelconque des revendications 1 à 3, caractérisée par le fait que lui est associé un dispositif d'actionnement permettant de commander les déplacements de l'organe obturateur (8) et constitué par un électro-aimant (17) agissant - directement ou indirectement - sur l'organe obturateur (8), l'ensemble formant une électro-vanne.

5. Soupape selon la revendication 4, caractérisée par le fait qu'elle constitue un ensemble unitaire monté en tant que tel, de façon interchangeable, sur le dispositif d'actionnement.

6. Soupape selon l'une quelconque des revendications 1 à 5, caractérisée par le fait que le siège (5) est réalisé en Téflon.

**Patentansprüche**

1. Ventil mit einem beweglichen Schließorgan (8) und einem zugehörigen ringförmigen Sitz (5), wobei das Schließorgan sich gemäß einer Richtung senkrecht zur Ebene des Sitzes derart bewegen kann, daß es letzteren schließt oder sich von ihm entfernt, wobei das Ventil so in der alge ist, den Fluß eines Fluids über den Sitz zu unterbrechen oder zu erlauben, wobei das Schließorgan (8), das durch eine Kugel gebildet wird, die mit dem kegelstumpfförmigen Sitz (5) zusammenwirkt, im Zentrum einer flexiblen kreisförmigen Membran (10) befestigt ist, die im wesentlichen eben ist und paralle zur Ebene des Sitzes (5) angeordnet ist und eine zentrale kreisförmige Öffnung aufweist, um den Zusammenbau der Kugel (8) über einen zentralen Träger (9) zu erlauben, wobei die Membran mittels Einfügungsverbindung am Träger (9) befestigt ist, und an ihrem Umfang mit einer Basis (3) befestigt ist, die mit dem Sitz (5) verbunden ist, **dadurch gekennzeichnet**, daß die mechanisch um ihr Zentrum gleich dehnbare Membran (10) elastisch entlang der zu ihrer Ebene senkrechten Richtung deformierbar, jedoch im wesentlichen gemäß einer jeden radialen Richtung von ihr undeformierbar ist, daß unter Spannung eingebaut sie eine Rückzugskraft auf das Schließorgang (8) ausübt, um dieses auf seinen Sitz (5) zu drücken, daß der zentrale Träger (9) einen Hohlraum bietet, in der die Kugel in Andruck auf den Boden des Hohlraums eingebracht ist, während die Einfügungsverbindung der Membran (10) mit dem zentralen Träger (9) durch Einzwicken und mit der Basis (3) durch Schweißen erhalten wird.

2. Ventil nach Anspruch 1, **dadurch gekennzeichnet**, daß die Membran (10) mit dem zentralen Träger (9) eine kontinuierliche Seitenwand bildet, die eine Kammer (25) mit der Basis (3) begrenzt, wobei letztere mit einer Öffnung (26) durchsetzt ist, die den Hindurchtritt von Fluid durch sie ermöglicht, wobei das Ventil so ein Klappe bildet, die in beiden Richtungen des Hindurchtritts des Fluids funktionieren kann und ihm das Fließen nur dann erlaubt, wenn sein Druck einen vorbestimmten Schwellenwert übersteigt, dessen Wert von der gewählten Durchtrittsrichtung durch das Ventil abhängt.

3. Ventil nach Anspruch 1, **dadurch gekennzeichnet**, daß die Membran (10) durchbrochen ist, um den Durchfluß des Fluids durch sie hindurch zu erlauben.

4. Ventil nach einem der Ansprüche 1 bis 3, **dadurch gekennzeichnet**, daß es einer Betätigungsvorrichtung zugeordnet ist, die die Bewegung des Schließorgans (8) steuert und durch einen Elektromagneten (17) gebildet wird, der - direkt oder indirekt - auf das Schließorgan (8) wirkt, wobei die Anordnung ein Elektroventil bildet.

5. Ventil nach Anspruch 4, **dadurch gekennzeichnet**, daß es eine einheitliche Anordnung bildet, die, so wie sie ist, auf austauschbare Weise auf der Betätigungsvorrichtung montiert ist.

6. Ventil nach einem der Ansprüche 1 bis 5, **dadurch gekennzeichnet**, daß der Sitz (5) aus Teflon gebildet ist.

**Claims**

1. Valve comprising a movable obturating member (8) and a conjugated annular seat (5), said obturating member being able to move along a direction perpendicular to the plane of the seat in order to come and obturate the latter, or to move away therefrom, the valve being then capable of interrupting or allowing the flow of a fluid through said seat, the obturating member (8), constituted by a ball cooperating with the seat (5), which has the shape of a truncated cone, being fixed in the center of a substantially flat flexible circular membrane (10), placed in parallel to the plane of the seat (5) and comprising a central circular opening to allow mounting of the ball (8) via a central support (9), the membrane being fixed by constraining connection (9) and, along its contour, to a base (3) with which the seat (5) is fast, characterized by the fact that the membrane (10), which is mechanically isotropic about its center, is elastically deformable in the direction perpendicular to its plane, but substantially rigid in any direction radial to the latter, in that being mounted in a prestressed condition, it exerts a restoring force on the obturating member (8) tending to apply it on its seat (5), in that the central support (9) presents a cavity in which the ball, resting against the bottom of the cavity, is crimped, while the constraining connection of the membrane (10) with the central support (9) is obtained by gripping, and with the base (3) by welding.

2. Valve according to claim 1, characterized by the fact that the membrane (10) forms with the central support (9) a continuous wall defining a chamber (25) with the base (3), said latter being provided with an orifice (26) allowing the flow of fluid therethrough, the valve thus forming a check valve which can operate in the two flowing directions of the fluid, and allowing the fluid flow only when its pressure exceeds a predetermined threshold the value of which is dependent on the selected flowing direction through the valve.

3. Valve according to claim 1, characterized by the fact that the membrane (10) is perforated to allow the flow of fluid therethrough.

4. Valve according to any one of claims 1 to 3, characterized by the fact that an actuating device is associated thereto, which controls the displacements of the obturating member (8) and which is constituted by an electro-magnet (17) acting, directly or indirectly, on the obturating member (8), the assembly forming an electrovalve.

5. Valve according to claim 4, characterized by the fact that it constitutes a unitary assembly mounted as such, in removable manner, on the actuating device.

6. Valve according to any one of claims 1 to 5, characterized by the fact that the seat (5) is made of Teflon.

Fig. 1

Fig. 2

Fig.3